# EUROPEAN PATENT SPECIFICATION

(11) **EP 1 375 608 B1**
(45) Date of publication and mention of the grant of the patent: **09.08.2006**
(21) Application number: 03013417.5
(22) Date of filing: 20.06.2003
(51) Int. Cl.: C09D 11/00

(54) **Ink set for ink jet and ink jet recording method**
Tintensatz für Tintenstrahldrucker und Tintenstrahlaufzeichnungsmethode
Assortiment d'encres pour impression par jet d'encre et méthode d'impression par jet d'encre

(30) Priority: 21.06.2002 JP 2002181862
(43) Date of publication of application: 02.01.2004
(73) Proprietor: FUJI PHOTO FILM CO., LTD., Minami-Ashigara-shi, Kanagawa (JP)
(72) Inventor: Taguchi, Toshiki, Fujinomiya-shi, Shizuoka (JP); Ozawa, Takashi, Fujinomiya-shi, Shizuoka (JP)
(74) Representative: HOFFMANN EITLE

(56) References cited:
- EP-A- 0 924 272
- EP-A- 1 122 288
- EP-A- 1 236 778
- EP-A1- 1 473 336
- US-A- 5 540 765
- US-A- 5 549 740
- US-A- 5 973 026
- US-A- 6 039 793
- DATABASE WPI Section Ch, Week 200034 Derwent Publications Ltd., London, GB; Class A97, AN 2000-394180 XP002247473 -& JP 2000 135854 A (KONICA CORP), 16 May 2000 (2000-05-16)
- FALBE J.; REGITZ M.: 'Römpp Chemielexikon', 1989, GEORG THIEME VERLAG, STUTTGART, NEW YORK * page 403 *

## Description

### FIELD OF THE INVENTION

The present invention relates to an ink set excellent in the durability of an image under high humidity conditions, and to an ink jet recording method.

### BACKGROUND OF THE INVENTION

With the spread of the computer in recent years, ink jet printers are widely utilized not only in offices but in homes for printing on paper, film and cloth.

As ink jet recording methods, a method of pressurizing ink by a piezoid and discharging ink droplets, a method of generating bubbles in ink by heat and discharging ink droplets, a method of using ultrasonic waves, and a method of sucking and discharging ink droplets by electrostatic force are known. As the ink compositions for these ink jet recording methods, water-based inks, oil-based inks and solid inks (a melting type) are used. Of these inks, water-based inks are mainly used from the points of handling properties, odor and safety.

Coloring agents for use in the inks for these ink jet recording methods are required to be high in solubility in a solvent, capable of high density recording, good in hue, fast to light, heat, air, water and chemicals, good in fixing ability to image-receiving materials and not liable to blot, excellent in storage stability as inks, nonpoisonous, high in purity, and available inexpensively. However, it is extremely difficult to find out coloring agents which satisfy these requirements on high levels. Various kinds of dyes and pigments have been suggested and brought into practical use for ink jet recording, however, a coloring agent which satisfies all of these requirements is not found yet under the present conditions. With conventionally well-known dyes and pigments, such as those attached with color index Nos. (C.I. Nos.), it is hard to reconcile them with the hue and fastness required of the inks for ink jet recording. The present inventors have forwarded examinations of dyes having good hue and fastness and development of excellent coloring agents for ink jet recording. However, compounds such as water-soluble dyes are inevitably substituted with a water-soluble group. It has been found that when the number of water-soluble group is increased for improving the stability of ink, the image formed is liable to blot under high humidity conditions.

### SUMMARY OF THE INVENTION

The objects of the present invention are to provide an ink set comprising inks for ink jet which hardly cause blotting of an image even under high humidity conditions, and an ink jet recording method.

The above objects of the present invention have been solved by the ink sets comprising the inks for ink jet and the ink jet recording method described in the following items.
(1) An ink set comprising at least four kinds of inks including colorless ink, wherein at least one of the coloring inks and the colorless ink contains a betaine compound, the coloring ink is an ink comprising a dye dissolved in water or an organic solvent, and the dye is a soluble dye wherein the betaine compound is represented by the following formula (1) : 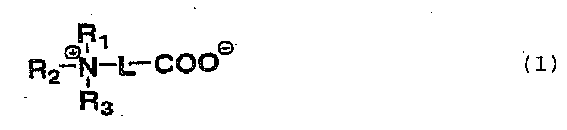 wherein R₁, R₂ and R₃ each represents an alkyl group, an aryl group or a heterocyclic group, at least two of R₁, R₂ and R₃ may be linked with each other to form a ring structure; L represents a divalent linking group; and at least one of R₁, R₂, R₃ and L is a group having from 8 to 40 carbon atoms.
(2) The ink set as described in the item (1), wherein R₁, R₂ and R₃ in formula (1) each represents an alkyl group.
(3) The ink set as described in the item (1), wherein at least one of R₁, R₂, R₃ and L is a linear alkyl group having from 8 to 40 carbon atoms.
(4) The ink set as described in the item (1), wherein at least one of R₁, R₂ and R₃ is a linear alkyl group having from 8 to 40 carbon atoms.
(5) The ink set as described in the item (1), wherein the at least four kinds of inks including colorless ink are inks of an aqueous solution type containing a water-soluble dye.
(6) The ink set as described in the item (1), wherein the at least one ink of at least four kinds of inks contains the betaine compound in a proportion of from 0.01 to 20 wt%, preferably 0.1 to 10% by weight and more preferably 0.5 to 5% by weight.
(7) The ink set as described in the item (1), wherein all of the at least four kinds of inks including colorless ink contain the betaine compound.
(8) An ink jet recording method which comprises image-recording by using the ink set described in any one of the items (1) to (7) with an ink jet printer..

### DETAILED DESCRIPTION OF THE INVENTION

The present invention is described in detail below. The ink set for ink jet in the present invention comprises at least four kinds of inks including colorless ink. Of betaine compounds, a compound represented by the above formula (1) is used in the present invention.

In formula (1), R₁, R₂ and R₃ each represents an alkyl group (preferably an alkyl group having from 1 to 20 carbon atoms, e.g., a methyl group, an ethyl group, a propyl group, a butyl group, a hexyl group, an octyl group, a dodecyl group, a cetyl group, a stearyl group, and an oleyl group), an aryl group (preferably an aryl group having from 6 to 20 carbon atoms, e.g., a phenyl group, a tolyl group, a xylyl group, a naphthyl group, a cumyl group, and a dodecylphenyl group), or a heterocyclic group (preferably a heterocyclic group having from 2 to 20 carbon atoms, e.g., a pyridyl group and a quinolyl group), each of which may be linked with each other to form a ring structure. Of these groups, an alkyl group is particularly preferred.

L represents a divalent linking group. As the examples thereof, a divalent linking group containing an alkylene group or an arylene group as a fundamental constitutional unit is preferred. Hetero atoms such as an oxygen atom, a sulfur atom and a nitrogen atom may be contained at the linking main chain part.

R₁, R₂, R₃ and L may be substituted with various substituents. As the examples of the substituents, e.g., an alkyl group (an alkyl group preferably having from 1 to 20, more preferably from 1 to 12, and particularly preferably from 1 to 8, carbon atoms, e.g., methyl, ethyl, isopropyl, tert-butyl, n-octyl, n-decyl, n-hexadecyl, cyclopropyl, cyclopentyl and cyclohexyl), an alkenyl group (an alkenyl group preferably having from 2 to 20, more preferably from 2 to 12, and particularly preferably from 2 to 8, carbon atoms, e.g., vinyl, allyl, 2-butenyl and 3-pentenyl), an alkynyl group (an alkynyl group preferably having from 2 to 20, more preferably from 2 to 12, and particularly preferably from 2 to 8, carbon atoms, e.g., propargyl and 3-pentynyl), an aryl group (an aryl group preferably having from 6 to 30, more preferably from 6 to 20, and particularly preferably from 6 to 12, carbon atoms, e.g., phenyl, p-methylphenyl and naphthyl), an amino group (an amino group preferably having from 0 to 20, more preferably from 0 to 12, and particularly preferably from 0 to 6, carbon atoms, e.g. , amino, methylamino, dimethylamino, diethylamino, diphenylamino and dibenzylamino), an alkoxyl group (an alkoxyl group preferably having from 1 to 20, more preferably from 1 to 12, and particularly preferably from 1 to 8, carbon atoms, e.g., methoxy, ethoxy and butoxy), an aryloxy group (an aryloxy group preferably having from 6 to 20, more preferably from 6 to 16, and particularly preferably from 6 to 12, carbon atoms, e.g., phenyloxy and 2-naphthyloxy), an acyl group (an acyl group preferably having from 1 to 20, more preferably from 1 to 16, and particularly preferably from 1 to 12, carbon atoms, e.g., acetyl, benzoyl, formyl and pivaloyl), an alkoxycarbonyl group (an alkoxycarbonyl group preferably having from 2 to 20, more preferably from 2 to 16, and particularly preferably from 2 to 12, carbon atoms, e.g., methoxycarbonyl and ethoxycarbonyl), an aryloxycarbonyl group (an aryloxycarbonyl group preferably having from 7 to 20, more preferably from 7 to 16, and particularly preferably from 7 to 10, carbon atoms, e.g., phenyloxycarbonyl), an acyloxy group (an acyloxy group preferably having from 2 to 20, more preferably from 2 to 16, and particularly preferably from 2 to 10, carbon atoms, e.g., acetoxy and benzoyloxy), an acylamino group (an acylamino group preferably having from 2 to 20, more preferably from 2 to 16, andparticularlypreferably from 2 to 10, carbon atoms, e.g., acetylamino and benzoylamino), an alkoxycarbonylamino group (an alkoxycarbonylamino group preferably having from 2 to 20, more preferably from 2 to 16, and particularly preferably from 2 to 12, carbon atoms, e.g., methoxycarbonylamino), an aryloxycarbonylamino group (an aryloxycarbonylamino group preferably having from 7 to 20, more preferably from 7 to 16, and particularly preferably from 7 to 12, carbon atoms, e.g., phenyloxycarbonylamino), a sulfonylamino group (a sulfonylamino group preferably having from 1 to 20, more preferably from 1 to 16, and particularly preferably from 1 to 12, carbon atoms, e.g., methanesulfonylamino and benzenesulfonylamino), a sulfamoyl group (a sulfamoyl group preferably having from 0 to 20, more preferably from 0 to 16, and particularly preferably from 0 to 12, carbon atoms, e.g., sulfamoyl, methylsulfamoyl, dimethylsulfamoyl and phenylsulfamoyl), a carbamoyl group (a carbamoyl group preferably having from 1 to 20, more preferably from 1 to 16, and particularly preferably from 1 to 12, carbon atoms, e.g., carbamoyl, methylcarbamoyl, diethylcarbamoyl and phenylcarbamoyl), and an alkylthio group (an alkylthio group preferably having from 1 to 20, more preferably from 1 to 16, and particularly preferably from 1 to 12, carbon atoms, e.g., methylthio and ethylthio), an arylthio group (an arylthio group preferably having from 6 to 20, more preferably from 6 to 16, and particularly preferably from 6 to 12, carbon atoms, e.g., phenylthio), a sulfonyl group (a sulfonyl group preferably having from 1 to 20, more preferably from 1 to 16, and particularly preferably from 1 to 12, carbon atoms, e.g., mesyl and tosyl), a sulfinyl group (a sulfinyl group preferably having from 1 to 20, more preferably from 1 to 16, and particularly preferably from 1 to 12, carbon atoms, e.g., methanesulfinyl and benzenesulfinyl), a ureido group (a ureido group preferably having from 1 to 20, more preferably from 1 to 16, and particularly preferably from 1 to 12, carbon atoms, e.g., ureido, methylureido and phenylureido), a phosphoric acid amido group (a phosphoric acid amido group preferably having from 1 to 20, more preferably from 1 to 16, and particularly preferably from 1 to 12, carbon atoms, e.g., diethylphosphoric acid amido and phenylphosphoric acid amido), a hydroxyl group, a mercapto group, a halogen atom (e.g., fluorine, chlorine, bromine and iodine), a cyano group, a sulfo group, a carboxyl group, a nitro group, a hydroxamic acid group, a sulfino group, a hydrazino group, an imino group, a heterocyclic group (a heterocyclic group preferably having from 1 to 30, and more preferably from 1 to 12, carbon atoms, and the hetero atoms include an oxygen atom, a sulfur atom and a nitrogen atom, e.g., imidazolyl, pyridyl, quinolyl, furyl, thienyl, piperidyl, morpholino, benzoxazolyl, benzimidazolyl, benzothiazolyl, carbazolyl and azepinyl), and a silyl group (a silyl group preferably having from 3 to 40, more preferably from 3 to 30, and particularly preferably from 3 to. 24, carbon atoms, e.g., trimethylsilyl and triphenylsilyl) are exemplified. These substituents may further be substituted. When there are two or more substituents, they may be the same or different. Each of R₁, R₂ and R₃ may be linked with each other to form a ring, if possible. A plurality of betaine structures may be contained via R₁, R₂, R₃ or L.

At least any one of R₁, R₂, R₃ and L is a group having 8 to 40 carbon atoms, preferably 10 to 34 carbon atoms, more preferably 12 to 28 carbon atoms. Above all, it is preferred that a long chain alkyl group is contained in each of R₁, R₂ and R₃.

The preferred examples of betaine compounds are shown below, but of course the present invention is not construed as being limited thereto.

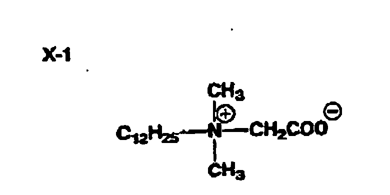

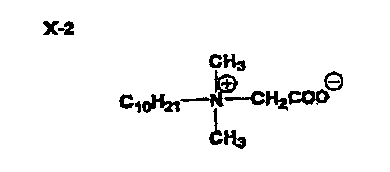

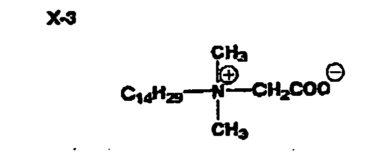

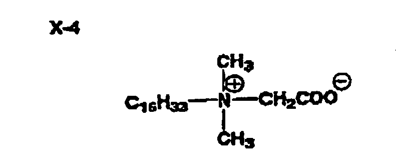

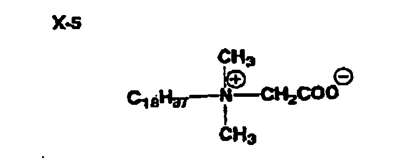

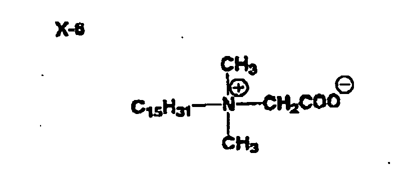

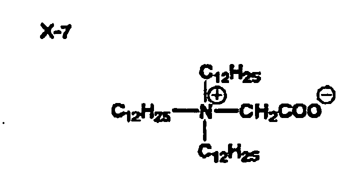

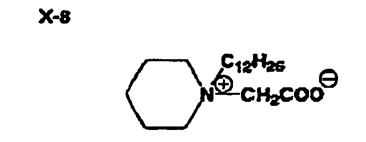

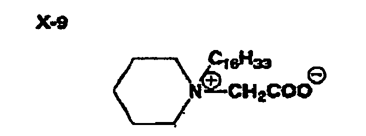

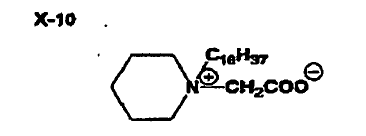

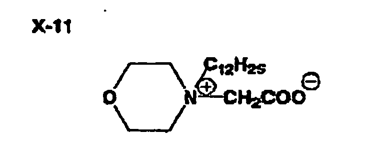

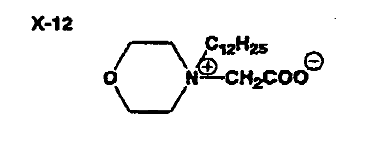

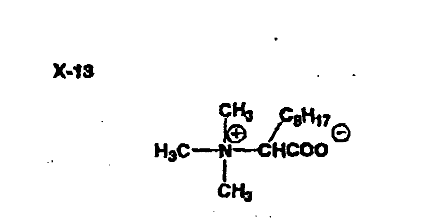

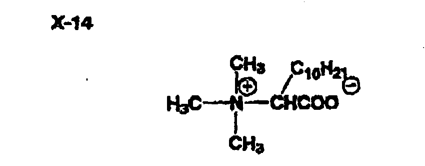

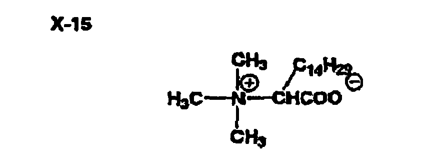

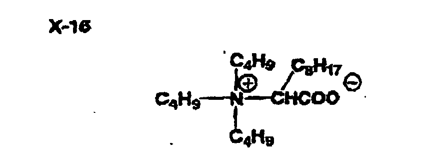

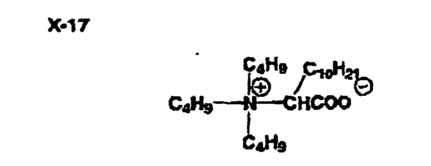

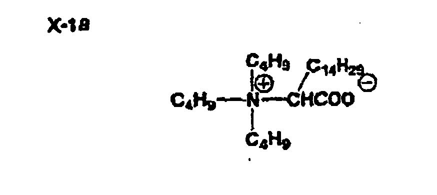

A betaine compound for use in the present invention is contained in the ink in a proportion of from 0.01 to 20 wt%, preferably from 0.1 to 10 wt%, and more preferably from 0.5 to 5 wt%.

By using a betaine compound in the present invention, the printed ink can be prevented from blotting.

The coloring ink used in the ink set in the present invention is ink comprising a dye dissolved in water or an organic solvent. Ink of an aqueous solution type containing a water-soluble dye is preferred above all. In the ink set, the inks containing betaine compounds may be any color, and colorless ink particularly having no color is prepared for a betaine compound. It is preferred that all the inks in the ink set in the present invention contain a betaine compound.

The colorless ink means ink having no coloring substance including white or black. By printing the colorless ink over a printed letter of colored ink not containing a betaine compound, the colorless ink can inhibit the colored ink from blotting. Further, the effect of the background color of a matter to be printed on can be utilized efficiently.

The examples of the dyes which can be used in the ink in the ink set of the present invention (hereinafter referred to as "the ink of the present invention") are shown below.

As the examples of yellow dyes, aryl and heterylazo dyes having, as the coupling component, e.g., phenols, naphthols, anilines, pyrazolones, pyridones, or open chain type active methylene compounds; azomethine dyes having, as the coupling component, e.g., open chain type active methylene compounds; methine dyes, e.g., a benzylidene dye and a monomethine oxonol dye; and quinone dyes, e.g., a naphthoquinone dye and an anthraquinone dye, are exemplified. Besides these dyes, quinophthalone dyes, nitronitroso dyes, acridine dyes and acridinone dyes can be exemplified. These dyes may be dyes which develop yellow color after a part of the chromophore is dissociated. In such a case, the counter cation may be an inorganic cation such as alkali metal and ammonium, may be an organic cation such as pyridinium and a quaternary ammonium salt, or may be a polymer cation having these cations as the partial structure.

As the examples of magenta dyes, aryl and heterylazo dyes having, as the coupling component, e.g., phenols, naphthols or anilines; azomethine dyes having, as the coupling component, e.g., pyrazolones or pyrazolotriazoles; methine dyes, e.g., an arylidene dye, a styryl dye, a merocyanine dye, and an oxonol dye; carbonium dyes, e.g., a diphenylmethane dye, a triphenylmethane dye and a xanthene dye; quinone dyes, e.g., a naphthoquinone dye, an anthraquinone dye and an anthrapyridone dye; and condensed polycyclic dyes, e.g., a dioxazine dye, are exemplified. These dyes may be dyes which develop magenta color after a part of the chromophore is dissociated. In such a case, the counter cation may be an inorganic cation such as alkali metal and ammonium, may be an organic cation such as pyridinium and a quaternary ammonium salt, or may be a polymer cation having these cations as the partial structure.

As the examples of cyan dyes, azomethine dyes, e.g., an indoaniline dye and an indophenol dye; polymethine dyes, e.g., a cyanine dye, an oxonol dye and a merocyanine dye; carbonium dyes, e.g., a diphenylmethane dye, a triphenylmethane dye and a xanthene dye; phthalocyanine dyes; anthraquinone dyes; aryl andheterylazo dyes having, as the coupling component, e.g., phenols, naphthols or anilines; and indigo-thioindigo dyes are exemplified. These dyes may be dyes which develop cyan color after a part of the chromophore is dissociated. In such a case, the counter cation may be an inorganic cation such as alkali metal and ammonium, may be an organic cation such as pyridinium and a quaternary ammonium salt, or may be a polymer cation having these cations as the partial structure.

A black dye such as a polyazo dye can also be used.

Water-soluble dyes, such as direct dyes, acid dyes, food dyes, basic dyes and reactive dyes can also be used in combination. The preferred examples of these dyes are shown below.
C.I. Direct Red 2, 4, 9, 23, 26, 31, 39, 62, 63, 72, 75, 76, 79, 80, 81, 83, 84, 89, 92, 95, 111, 173, 184, 207, 211, 212, 214, 218, 21, 223, 224, 225, 226, 227, 232, 233, 240, 241, 242, 243, 247;
C.I. Direct Violet 7, 9, 47, 48, 51, 66, 90, 93, 94, 95, 98, 100, 101;
C.I. Direct Yellow 8, 9, 11, 12, 27, 28, 29, 33, 35, 39, 41, 44, 50, 53, 58, 59, 68, 86, 87, 93, 95, 96, 98, 100, 106, 108, 109, 110, 130, 132, 142, 144, 161, 163;
C.I. Direct Blue 1, 10, 15, 22, 25, 55, 67, 68, 71, 76, 77, 78, 80, 84, 86, 87, 90, 98, 106, 108, 109, 151, 156, 158, 159, 160, 168, 189, 192, 193, 194, 199, 200, 201, 202, 203, 207, 211, 213, 214, 218, 225, 229, 236, 237, 244, 248, 249, 251, 252, 264, 270, 280, 288, 289, 291;
C.I. Direct Black 9, 17, 19, 22, 32, 51, 56, 62, 69, 77, 80, 91, 94, 97, 108, 112, 113, 114, 117, 118, 121, 122, 125, 132, 146, 154, 166, 168, 173, 199;
C.I. Acid Red 35, 42, 52, 57, 62, 80, 82, 111, 114, 118, 119, 127, 128, 131, 143, 151, 154, 158, 249, 254, 257, 261, 263, 266, 289, 299, 301, 305, 336, 337, 361, 396, 397;
C.I. Acid Violet 5, 34, 43, 47, 48, 90, 103, 126;
C.I. Acid Yellow 17, 19, 23, 25, 39, 40, 42, 44, 49, 50, 61, 64, 76, 79, 110, 127, 135, 143, 151, 159, 169, 174, 190, 195, 196, 197, 199, 218, 219, 222, 227;
C.I. Acid Blue 9, 25, 40, 41, 62, 72, 76, 78, 80, 82, 92, 106, 112, 113, 120, 127:1, 129, 138, 143, 175, 181, 205, 207, 220, 221, 230, 232, 247, 258, 260, 264, 271, 277, 278, 279, 280, 288, 290, 326;
C.I. Acid Black 7, 24, 29, 48, 52:1, 172;
C.I. Reactive Red 3, 13, 17, 19, 21, 22, 23, 24, 29, 35, 37, 40, 41, 43, 45, 49, 55;
C.I. Reactive Violet 1, 3, 4, 5, 6, 7, 8, 9, 16, 17, 22, 23, 24, 26, 27, 33, 34;
C.I. Reactive Yellow 2, 3, 13, 14, 15, 17, 18, 23, 24, 25, 26, 27, 29, 35, 37, 41, 42;
C.I. Reactive Blue 2, 3, 5, 8, 10, 13, 14, 15, 17, 18, 19, 21, 25, 26, 27, 28, 29, 38;
C.I. Reactive Black 4, 5, 8, 14, 21, 23, 26, 31, 32, 34;
C.I. Basic Red 12, 13, 14, 15, 18, 22, 23, 24, 25, 27, 29, 35, 36, 38, 39, 45, 46;
C.I. Basic Violet 1, 2, 3, 7, 10, 15, 16, 20, 21, 25, 27, 28, 35, 37, 39, 40, 48;
C.I. Basic Yellow 1, 2, 4, 11, 13, 14, 15, 19, 21, 23, 24, 25, 28, 29, 32, 36, 39, 40;
C.I. Basic Blue 1, 3, 5, 7, 9, 22, 26, 41, 45, 46, 47, 54, 57, 60, 62, 65, 66, 69, 71; and
C.I. Basic Black 8.

Further, pigments can be used in combination.

In addition to commercially available pigments, well-known pigments described in a large literature can be used in the ink of the present invention. The pigments described, e.g., in The Society of Dyers and Colourists compiled, Color Index, Nippon Ganryo Gijutsu Kyokai compiled, Kaitei Shinpan Ganryo Binran (Novel Pigment Handbook, Revised Edition) (1989), Saishin Ganryo Oyo Gijutsu (The Latest Applied Techniques of Pigments), CMC Publishing Co. (1986), Insatsu Ink Gijutsu (The techniques of Printing Inks), CMC Publishing Co. (1984), and W. Herbst and K. Hunger, Industrial Organic Pigments, VCH Verlagsgesellschaft (1993) can be exemplified. Specifically, as organic pigments, such as azo pigments (e.g., azo lake pigments, insoluble azo pigments, condensed azo pigments, and chelate azo pigments), polycyclic pigments (e.g., phthalocyanine pigments, anthraquinone pigments, perylene and perinone pigments, indigo pigments, quinacridone pigments, dioxazine pigments, isoindolinone pigments, quinophthalone pigments, diketopyrrolopyrrole pigments), dyed lake pigments (e.g., lake pigments of acid or basic dyes), and azine pigments, and as inorganic pigments, such as yellow pigments, e.g., C.I. Pigment Yellow 34, 37, 42 and 53, red pigments, e.g., C.I. Pigment Red 101 and 108, blue pigments, e.g., C.I. Pigment Blue 27, 29 and 17:1, black pigments, e.g., C.I. Pigment Black 7 and magnetite, and white pigments, e.g., C.I. Pigment White 4, 6, 18 and 21, can be exemplified.

As the pigments having preferred tone for image formation, with respect to blue or cyan pigments, phthalocyanine pigments, anthraquinone series indanthrone pigments (e.g., C.I. Pigment Blue 60), and triarylcarbonium pigments of dyed lake pigments are preferably used, and phthalocyanine pigments are most preferred (the preferred examples include copper phthalocyanine, e.g., C.I. Pigment Blue 15:1, 15:2, 15:3, 15:4 and 15:6, monochlorinated or low chlorinated copper phthalocyanine, a pigment disclosed in EP 860475 as aluminum phthalocyanine, metal-free phthalocyanine C.I. Pigment Blue 16, and phthalocyanine having Zn, Ni or Ti as the central metal, and of these pigments, C.I. Pigment Blue 15:3 and 15:4 and aluminum phthalocyanine are especially preferred).

With respect to red or purple pigments, azo pigments (the preferred examples include C.I. Pigment Red 3, 5, 11, 22, 38, 48:1, 48:2, 48:3, 48:4, 49:1, 52:1, 53:1, 57:1, 63:2, 144, 146 and 184, above all, C.I. Pigment Red 57:1, 146 and 184 are preferred), quinacridone pigments (the preferred examples include C.I. Pigment Red 122, 192, 202, 207 and 209, C.I. Pigment Violet 19 and 42, above all, C.I. Pigment Red 122 is preferred), triarylcarbonium pigments of dyed lake series pigments (the preferred examples include xanthene series C.I. Pigment Red 81:1, C.I. Pigment Violet 1, 2, 3, 27 and 39), dioxazine pigments (e.g., C.I. Pigment Violet 23 and 37), diketopyrrolopyrrole pigments (e.g., C.I. Pigment Red 254), perylene pigments (e.g., C.I. Pigment Violet 29), anthraquinone pigments (e.g., C.I. Pigment Violet 5:1, 31 and 33), thioindigo pigments (e.g., C.I. Pigment Red 38 and 88) are preferably used.

With respect to yellow pigments, azo pigments (the preferred examples include monoazo pigment series C.I. Pigment. Yellow 1, 3, 74 and 98, disazo pigment series C.I. Pigment Yellow 12, 13, 14, 16, 17 and 83, synthesis azo series C.I. Pigment Yellow 93, 94, 95, 128 and 155, and benzimidazolone series C.I. Pigment Yellow 120, 151, 154, 156 and 180, and pigments not using benzidine compounds as the starting material are preferred above all), isoindoline-isoindolinone pigments (the preferred examples include C.I. Pigment Yellow 109, 110, 137 and 139), quinophthalone pigments (the preferred example includes C.I. Pigment Yellow 138), and flavanthrone pigments (e.g., C.I. Pigment Yellow 24) are preferably used.

With respect to black pigments, inorganic pigments (the preferred examples include carbon black and magnetite), and aniline black are preferably used.

In addition to the above pigments, orange pigments (e.g., C.I. Pigment Orange 13 and 16) and green pigments (e.g., C.I. Pigment Green 7) may be used in the present invention.

The pigments which can be used in the present invention may be naked pigments as described above or they may be surface-covered pigments. As the surface treating methods, a method of surface-coating with resins and waxes, a method of adhering surfactants to pigment surfaces, and a method of bonding reactive substances (e.g., silane coupling agents, epoxy compounds, polyisocyanate, or radicals generated from diazonium salts) to pigment surfaces. These methods are described in the following literature and patent specifications.
(1) Kinzoku-Sekken no Seishitsu to Oyo (Properties and Applications of Metal Soaps), Saiwai Shobo Co.
(2) Insatsu-Ink Insatsu (Printing of Printing Inks), CMC Publishing Co. (1984)
(3) Saishin Ganryo Oyo Gijutsu (The Latest Applied Techniques of Pigments), CMC Publishing Co. (1986)
(4) U.S. Patents 5,554,739 and 5,571,311
(5) JP-A-9-151342 (the term "JP-A" as used herein means an "unexamined published Japanese patent application"), JP-A-10-140065, JP-A-10-292143 and JP-A-11-166145

In particular, the self-dispersible pigments prepared by making the diazonium salts disclosed in U.S. Patents in (4) act on carbon black, and the encapsulated pigments prepared by the methods disclosed in JP-A in (5) are particularly useful, since dispersion stability can be obtained without using an extra dispersant in inks.

In the ink of the present invention, pigments may be further dispersed with a dispersant. A variety of well-known dispersants, e.g., low molecular weight dispersants and high molecular weight dispersants of a surfactant type, can be used in accordance with the pigment to be used. The examples of dispersants are disclosed in JP-A-3-69949 and EP 549486. When a dispersant is used, a pigment derivative called a synergist may be added to accelerate the adsorption of the dispersant onto the pigment.

The particle size of the pigments which can be used in the ink of the present invention is preferably from 0.01 to 10 µm after dispersion, and more preferably from 0.05 to 1 µm.

Well-know dispersing methods used in the manufacture of inks and toners can be used as the dispersing methods of pigments. The examples of dispersing apparatus include a vertical or horizontal agitator mill, an attritor, a colloid mill, a ball mill, a three-roll mill, a pearl mill, a super-mill, an impeller, a disperser, a KD mill, a dynatron, and a pressure kneader. These dispersing apparatus are described in detail in Saishin Ganryo Oyo Gijutsu (The Latest Applied Techniques of Pigment), CMC Publishing Co. (1986).

The ink of the present invention can be manufactured by dissolving or dispersing ingredients containing at least either a dye or a betaine compound in water. The ink of the present invention can contain ingredients other than a dye and a betaine compound. Here, "ingredients" other than a dye and a betaine compound mean a solvent, e.g., a water-miscible organic solvent, a wetting agent, a stabilizer and an antiseptic.

In preparing the ink of the present invention, when the dye is a water-soluble dye, it is preferred to dissolve the dye in water in the first place. In the next place, various ingredients, such as solvents and additives, are added, dissolved and mixed, to thereby manufacture uniform ink.

As the dissolving method at this time, various methods, e.g., dissolution by agitation, dissolution by ultrasonic wave irradiation, and dissolution by shaking, can be used, and dissolution by agitation is particularly preferably used. When agitation is performed, various methods, e.g., fluid agitation well-known in this field, and agitation making use of shear force by a reverse agitator or a dissolver can be used. On the other hand, an agitating method utilizing the shear force with the bottom of a vessel, e.g., a magnetic agitator, can also be preferably used.

By adding a surfactant into the ink of the present invention and adjusting the liquid physical properties of the ink, ink discharge stability can be improved, and excellent effects in the improvement of the waterproof property of an image and the prevention of the blot by the printed ink can be brought about.

As the examples of surfactants, in addition to betaine compounds, such as anionic surfactants, e.g., sodium dodecylsulfate, sodium dodecyloxysulfonate, and sodium alkylbenzenesulfonate, cationic surfactants, e.g., cetylpyridinium chloride, trimethylcetylammonium chloride, and tetrabutylammonium chloride, and nonionic surfactants, e.g., polyoxyethylene nonylphenyl ether, polyoxyethylene naphthyl ether, and polyoxyethylene octylphenyl ether are exemplified Nonionic surfactants and betaine compounds are preferably used above all.

The use amount of surfactants is from 0.001 to 15 wt%, preferably from 0.005 to 10 wt%, and more preferably from 0.01 to 5 wt%, based on the ink of the present invention.

The examples of water-miscible organic solvents which can be used in the present invention include alcohols (e.g., methanol, ethanol, propanol, isopropanol, butanol, isobutanol, sec-butanol, t-butanol, pentanol, hexanol, cyclohexanol and benzyl alcohol), polyhydric alcohols (e.g., ethylene glycol, diethylene glycol, triethylene glycol, polyethylene glycol, propylene glycol, dipropylene glycol, polypropylene glycol, butylene glycol, hexanediol, pentanediol, glycerol, hexanetriol and thioglycol), glycol derivatives (e.g., ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether, and ethylene glycol monophenylether), amines (e.g., ethanolamine, diethanolamine, triethanolamine, N-methyldiethanolamine, N-ethyldiethanolamine, morpholine, N-ethylmorpholine, ethylenediamine, diethylenetriamine, triethylenetetramine, polyethyleneimine and tetramethylpropylenediamine), and other polar solvents (e.g., formamide, N,N-dimethylformamide, N,N-dimethylacetamide, dimethyl sulfoxide, sulforan, 2-pyrrolidone, N-methyl-2-pyrrolidone, N-vinyl-2-pyrrolidone, 2-oxazolidone, 1,3-dimethyl-2-imidazolidinone, acetonitrile and acetone). These water-miscible organic solvents may be used in combination of two or more.

When the dye is a water-soluble dye, the ink of the present invention can be manufactured by dissolving the dye in a high boiling point organic solvent.

The boiling point of the high boiling point organic solvents which are used in the present invention is 150°C or more, and preferably 170°C or more.

The examples of the high boiling point organic solvents include phthalic esters (e.g., dibutyl phthalate, dioctyl phthalate, dicyclohexyl phthalate, di-2-ethylhexyl phthalate, decyl phthalate, bis(2,4-di-tert-amylphenyl) isophthalate, and bis(1,1-diethylpropyl) phthalate), phosphoric or phosphonic esters (e.g., diphenyl phosphate, triphenyl phosphate, tricresyl phosphate, 2-ethylhexyldiphenyl phosphate, dioctylbutyl phosphate, tricyclohexyl phosphate, tri-2-ethylhexyl phosphate, tridecyl phosphate, and di-2-ethylhexylphenyl phosphate), benzoic esters (e.g., 2-ethylhexyl benzoate, 2,4-dichlorobenzoate, dodecyl benzoate, and 2-ethylhexyl-p-hydroxy benzoate), amides (e.g., N,N-diethyldodecanamide and N,N-diethyllaurylamide), alcohols or phenols (e.g., isostearyl alcohol, and 2,4-di-tert-amylphenol), aliphatic esters (e.g., dibutoxyethyl succinate, di-2-ethylhexyl succinate, 2-hexadecyl tetradecanoate, tributyl citrate, diethyl azelate, isostearyl lactate, and trioctyl citrate), aniline derivatives (e.g., N,N-dibutyl-2-butoxy-5-tert-octylaniline), chlorinated paraffins (e.g., paraffins having a chlorine content of from 10 to 80%), trimesic esters (e.g., tributyl trimesate), dodecylbenzene, diisopropylnaphthalene, phenols (e.g., 2,4-di-tert-amylphenol, 4-dodecyloxyphenol, 4-dodecyloxycarbonylphenol, and 4-(4-dodecyloxyphenylsulfonyl)phenol), carboxylic acids (e.g., 2-(2,4-di-tert-amylphenoxybutyric acid and 2-ethoxyoctanedecanoic acid), and alkylphosphoric acids (e.g., di-2-(ethylhexyl) phosphoric acid and diphenylphosphoric acid) . The high boiling point organic solvents can be used in an amount of from 0.01 to 3 times of the oil-soluble dye in a mass ratio, and preferably from 0.01 to 1.0 time.

These high boiling point organic solvents may be used alone, or may be used as mixture of two or more (e.g., mixtures of tricresyl phosphate and dibutyl phthalate, trioctyl phosphate and di (2-ethylhexyl) sebacate, and dibutyl phthalate and poly(N-t-butylacrylamide)).

The examples of the high boiling point organic solvents other than the above compounds which are used in the present invention and/or the synthesis methods of these high boiling point organic solvents are disclosed, e.g., in U.S. Patents 2,322,027, 2,533,514, 2,772,163, 2,835,579, 3,594,171, 3,676,137, 3,689,271, 3,700,454, 3,748,141, 3,764,336, 3,765,897, 3,912,515, 3,936,303, 4,004,928, 4,080,209, 4,127,413, 4,193,802, 4,207,393, 4,220,711, 4,239,851, 4,278,757, 4,353,979, 4,363,873, 4,430,421, 4,430,422, 4,464,464, 4,483,918, 4,540,657, 4,684,606, 4,728,599, 4,745,049, 4,935,321, 5,013,639, EP-A-276319, EP-A-286253, EP-A-289820, EP-A-309158, EP-A-309159, EP-A-309160, EP-A-509311, EP-A-510576, East German Patents 147, 009, 157,147, 159,573, 225,240A, British Patent 2,091,124A, JP-A-48-47335, JP-A-50-26530, JP-A-51-25133, JP-A-51-26036, JP-A-51-27921, JP-A-51-27922, JP-A-51-149028, JP-A-52-46816, JP-A-53-1520, JP-A-53-1521, JP-A-53-15127, JP-A-53-146622, JP-A-54-91325, JP-A-54-106228, JP-A-54-118246, JP-A-55-59464, JP-A-56-64333, JP-A-56-81836, JP-A-59-204041, JP-A-61-84641, JP-A-62-118345, JP-A-62-247364, JP-A-63-167357, JP-A-63-214744, JP-A-63-301941, JP-A-64-9452, JP-A-64-9454, JP-A-64-68745, JP-A-1-101543, JP-A-1-102454, JP-A-2-792, JP-A-2-4239, JP-A-2-43541, JP-A-4-29237, JP-A-4-30165, JP-A-4-232946 and JP-A-4-346338.

The high boiling point organic solvents are used in an amount of from 0.01 to 3.0 times of the oil-soluble dye in a mass ratio, and preferably from 0.01 to 1.0 time.

In the invention, it is preferred to use oil-soluble dyes and high boiling point organic solvents by being emulsified and dispersed in an aqueous medium. In emulsification-dispersion, a low boiling point organic solvent can be used in some cases from the viewpoint of an emulsifying property. The low boiling point organic solvent is an organic solvent having a boiling point of from about 30°C to about 150°C at atmospheric pressure. For example, esters (e.g., ethyl acetate, butyl acetate, ethyl propionate, beta-ethoxyethyl acetate and methyl Cellosolve acetate), alcohols (e.g., isopropyl alcohol, n-butyl alcohol and sec-butyl alcohol), ketones (e.g., methyl isobutyl ketone, methyl ethyl ketone and cyclohexanone), amides (e.g., dimethylformamide and N-methylpyrrolidone), and ethers (e.g., tetrahydrofuran and dioxane) are preferably used as low boiling point organic solvents, but low boiling point organic solvents are not limited to these compounds.

An oil phase comprising a dye dissolved in a high boiling point organic solvent, and in certain circumstances, in a mixed solvent of a high boiling point organic solvent and a low boiling point organic solvent, is emulsified and dispersed in a water phase mainly comprising water, to thereby form minute oil droplets of oil phase. At this time, the later-described ingredients, e.g., surfactants, wetting agents, dye stabilizers, emulsion stabilizers, antiseptics and antifungal agents, can be added to either one or both of a water phase and an oil phase, according to necessary.

A method of adding an oil phase to a water phase is generally performed as the emulsifying method, but a so-called phase reversal emulsifying method of dripping a water phase to an oil phase can also be preferably used. Further, when the azo dye for use in the present invention is water-soluble and the ingredients are oil-soluble, the above emulsifying method can also be used.

Various kinds of surfactants can be used in emulsification dispersion, such as anionic surfactants, e.g., fatty acid salts, alkyl sulfate, alkylbenzene sulfonate, alkylnaphthalene sulfonate, dialkyl sulfosuccinate, alkyl phosphate, condensation products of naphthalenesulfonic acid and formalin, and polyoxyethylene alkyl sulfate, and nonionic surfactants, e.g., polyoxyethylene alkyl ether, polyoxyethylene alkylaryl ether, polyoxyethylene fatty acid ester, sorbitan fatty acid ester, polyoxyethylene sorbitan fatty acid ester, polyoxyethylene alkylamine, glycerol fatty acid ester, and oxyethylene-oxypropylene block copolymer are preferably used. Further, SURFYNOLS (manufactured by Air Products & Chemicals), which is an acetylene-based polyoxyethylene oxide surfactant, is also preferably used. Amine oxide type ampholytic surfactants, e.g., N,N-dimethyl-N-alkylamine oxide, are also preferably used. In addition, the surfactants described in JP-A-59-157636, pp. 37 and 38, and Research Disclosure, No. 308119 (1989) can also be used.

Water-soluble polymers can be added in combination with the above surfactants for the purpose of stabilization just after emulsification. As such water-soluble polymers, polyvinyl alcohol, polyvinyl pyrrolidone, polyethylene oxide, polyacrylic acid, polyacrylamide and copolymers of these polymers are preferably used. It is also preferred to use natural water-soluble polymers, e.g., polysaccharides, casein and gelatin. For the stabilization of the dispersion product of a dye, polyvinyl, polyurethane, polyester, polyamide, polyurea and polycarbonate, which are substantially insoluble in an aqueous medium and produced by the polymerization of acrylic esters, methacrylic esters, vinyl esters, acrylamides, methacrylamides, olefins, styrenes, vinyl ethers and acrylonitriles, can also be used in combination. It is preferred for these polymers to contain -SO₃⁻ or -COO⁻. When these polymers substantially insoluble in an aqueous medium are used, the use amount is preferably 20 wt% or less of the high boiling point organic solvent, and more preferably 10 wt% or less.

When water-base ink is manufactured by emulsifying and dispersing an oil-soluble dye and a high boiling point organic solvent, controlling the particle size is particularly important. In forming an image by ink jet, it is essential to make the average particle size of ink small in order to increase color purity and density. The average particle size is preferably 1 µm or less, and more preferably from 5 to 100 nm, in volume average particle size.

The volume average particle size and particle size distribution of dispersed particles can be easily measured according to well-knownmethods, e.g., a static light scattering method, a dynamic light scattering method, a centrifugal precipitation method, and the method described in Jikken Kagaku Koza (Lectures on Experimental Chemistry), 4th Ed., pp. 417 and 418. For example, it can be easily measured with a volume average particle size meter on the market (e.g., Microtrack UPA, manufactured by Nikkiso Co., Ltd.) by diluting ink with distilled water so that the particle concentration in the ink reaches from 0.1 to 1 wt%. The dynamic light scattering method making use of laser Doppler effect is especially preferably used, since it is possible to measure to the extent of small size particles.

A volume average particle size is an average particle size weighted by the volume of particles, and this is a value obtained by multiplying the diameter of each particle in the aggregation of the particles by the volume of each particle, and dividing the sum total of the thus-obtained value of each particle by the total volume of the particles. A volume average particle size is described in Soichi Muroi, Kobunshi Latex no Kagaku (Chemistry of High Polymer Latex), p. 119, published by Kobunshi Kanko-Kai.

It has been found that the presence of coarse particles has a serious influence upon printing performance. That is, discharge failure or discharge unevenness of ink is caused due to clogging of a head nozzle by coarse particles or due to the formation of fouling even if the head does not clog, which greatly influences printing performance. For preventing this state of affairs from occurring, it is important to suppress the numbers of particles having a particle size of 5 µm or more to 10 or less and a particle size of 1 µm or more to 1,000 or less in 1 µl of ink.

For removing these coarse particles, well-known centrifugal separation method and precision filtration method can be used. The separation may be performed just after emulsification and separation or may be performed after adding various ingredients, such as a wetting agent and a surfactant, to the emulsified and dispersed product and immediately before charging the ink in an ink cartridge.

As the effective means to obtain a small average particle size free of coarse particles, mechanical emulsifiers can be used.

As emulsifiers, well-known apparatus, e.g., a simple stirrer, an impeller, and an in-line stirring system, a milling system, e.g., a colloid mill, and an ultrasonic wave system can be used, but a high pressure homogenizer is particularly preferably used.

With respect to high pressure homogenizers, the mechanisms are disclosed in detail in U.S. Patent 4,533,254 and JP-A-6-47264. As commercially available pressure homogenizers, Gaulin Homogenizer (manufactured by A.P.V. Gaulin Inc.), Microfluidizer (manufactured by Microfluidex Inc.), and Ultimizer (manufactured by Sugino Machine Co., Ltd.) are known.

Further, as is disclosed in U.S. Patent 5,720,551 in recent years, a high pressure homogenizer equipped with the mechanism of effecting atomization in a superhigh pressure jet current is especially effective for the emulsification dispersion of the present invention. As an example of an emulsifier using a superhigh pressure jet current, De Bee 2000 (Bee International Ltd.) is exemplified.

The pressure in performing emulsification with a high pressure emulsifying-dispersing apparatus is 50 PMa or more, preferably 60 MPa or more, and more preferably 180 PMa or more.

It is particularly preferred to use a method of using two or more emulsifiers in combination, e.g., by the method of emulsifying ink ingredients with a stirring-emulsifier, and then emulsifying with a high pressure homogenizer. A method of once emulsifying ingredients with these emulsifiers, adding ingredients, such as a wetting agent and a surfactant, and then passing the ink through a high pressure homogenizer again while discharging the ink in a cartridge is also preferably used.

When a low boiling point organic solvent is used in addition to a high boiling point organic solvent, it is preferred to remove the low boiling point organic solvent from the viewpoint of the stability of an emulsified product and safety and hygiene. A variety of well-known methods can be used for removing low boiling point organic solvents in accordance with the kinds of solvents, i.e., an evaporation method, a vacuum evaporation method and an ultrafiltration method can be used. A removing process of a low boiling point organic solvent is preferably performed immediately after emulsification as soon as possible.

Manufacturing methods of inks for ink jet are disclosed in detail in JP-A-5-148436, JP-A-5-295312, JP-A-7-97541, JP-A-7-82515 and JP-A-7-118584, and these methods can be used in manufacturing the ink of the present invention.

The ink of the present invention can contain functional ingredients for imparting a variety of functions to the ink. As the functional ingredients, e.g., a drying inhibitor for preventing clogging of ink at an ink jet port due to drying, a penetration accelerator for accelerating the penetration of ink into paper, an ultraviolet absorber, an antioxidant, a viscosity adjustor, a surface tension adjustor, a dispersant, a dispersion stabilizer, an antifungal agent, a rust preventive, a pH adjustor, a defoaming agent and a chelating agent are exemplified, and these functional ingredients can be selected arbitrarily and used each in an appropriate amount. A compound capable of showing one or two or more functions as one compound alone is also included in the functional ingredients. Accordingly, in the mixing ratio of the following functional ingredients, when a certain compound has a plurality of functions, the compound is included in each functional ingredient independently. The functional ingredient may be a betaine compound which is essentially contained in the ink of the present invention, or may be an organic solvent when an oil-soluble dye or the like is contained.

As the drying inhibitors which are used in the present invention, water-soluble organic solvents having a lower vapor pressure than water are preferred. The specific examples of drying inhibitors include polyhydric alcohols represented by ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerol, and trimethylolpropane, lower alkyl ethers of polyhydric alcohols, e.g., ethylene glycol monomethyl (or ethyl) ether, diethylene glycol monomethyl (or ethyl) ether, and triethylene glycol monoethyl (or butyl) ether, heterocyclic rings, e.g., 2-pyrrolidone, N-methyl-2-pyrrolidone, 1,3-dimethyl-2-imidazolidinone, and N-ethylmorpholine, sulfur-containing compounds, e.g., sulforan, dimethyl sulfoxide and 3-sulforen, polyfunctional compounds, e.g., diacetone alcohol and diethanolamine, and urea derivatives. Of these compounds, polyhydric alcohols, such as glycerol and diethylene glycol are more preferred. These drying inhibitors may be used alone or may be used in combination of two or more. Drying inhibitors are preferably used in an amount of from 10 to 50 wt% in the ink of the present invention.

As the penetration accelerators which are used in the present invention, alcohols, e.g., ethanol, isopropanol, butanol, di(tri)ethylene glycol monobutyl ether, and 1,2-hexanediol, sodium lauryl sulfate, sodium oleate, and nonionic surfactants can be used. Penetration accelerators sufficiently show their effect when the amount of from 10 to 30 wt% is contained in the ink of the present invention. The amount of penetration accelerators should be sufficient to prevent blotting of printing and print through.

As the ultraviolet absorbers which are used in the present invention to improve the storage stability of an image, the benzotriazole compounds disclosed in JP-A-58-185677, JP-A-61-190537, JP-A-2-782, JP-A-5-197075 and JP-A-9-34057, the benzophenone compounds disclosed in JP-A-46-2784, JP-A-5-194483 and U.S. Patent 3,214,463, the cinnamic acid compounds disclosed in JP-B-48-30492 (the term "JP-B" as used herein means an "examined Japanese patent publication"), JP-B-56-21141 and JP-A-10-88106, the triazine compounds disclosed in JP-A-4-298503, JP-A-8-53427, JP-A-8-239368, JP-A-10-182621, and International Patent Publication No. 501291/1996, the compounds described in Research Disclosure, No. 24239, and compounds which absorb ultraviolet rays and emit fluorescence represented by stilbene compounds and benzoxazole compounds, i.e., a so-called fluorescent brightening agent, can be used.

As the antioxidants to improve the storage stability of an image, various kinds of organic series and metal complex series discoloration inhibitors can be used in the present invention. The examples of organic discoloration inhibitors include hydroquinones, alkoxyphenols, dialkoxyphenols, phenols, anilines, amines, indanes, chromans, alkoxyanilines and heterocyclic rings, and the examples of metal complex discoloration inhibitors include nickel complex and zinc complex. More specifically, the compounds described in Research Disclosure, No. 17643, items VII-I to J, ibid., No. 15162, ibid., No. 18716, p. 650, left column, ibid. , No. 36544, p. 527, ibid., No. 307105, p. 872, and ibid., No. 15162, and the compounds represented by formulae disclosed in JP-A-62-215272, pp. 127 to 137 and the exemplified compounds thereof can be used.

As the antifungal agents which are used in the present invention, sodium dehydroacetate, sodium benzoate, sodium pyridinethione-1-oxide, ethyl p-hydroxybenzoate, 1, 2-benzisothiazolin-3-one, and the salts thereof are exemplified. Antifungal agents are preferably used in an amount of from 0.02 to 5.00 wt% in the ink of the present invention.

These compounds are described in detail in Bohkin Bohbai Zai Jiten (Thesaurus of Antibacterial and Antifungal Agents) , compiled by Nippon Bohkin Bohbai Gakkai Thesaurus Compilation Committee.

As the rust preventives, e.g., acid sulfite, sodium thiosulfate, ammon thioglycolate, diisopropylammonium nitrite, pentaerythritol tetranitrate, dicyclohexylammonium nitrite, and benzotriazole are exemplified. Rust preventives are preferably used in an amount of from 0.02 to 5.00 wt% in the ink of the present invention.

pH adjustors are preferably used to adjust pH and impart the property of dispersion stability, and it is preferred that pH of the ink is adjusted to 8 to 11 at 25°C. When pH is less than 8, the solubility of a dye lowers, as a result, a nozzle is liable to cause clogging, and when it exceeds 11, the waterproof property tends to deteriorate. As pH adjustors, organic bases and inorganic alkalis are exemplified as basic compounds, and organic and inorganic acids as acidic compounds.

As the basic compounds, inorganic compounds, e.g., sodium hydroxide, potassium hydroxide, sodium carbonate, potassium carbonate, sodium hydrogencarbonate, potassium hydrogencarbonate, sodium acetate, potassium acetate, sodium phosphate, and sodium monohydrogenphosphate; and organic bases, e.g., aqueous ammonia, methylamine, ethylamine, diethylamine, triethylamine, ethanolamine, diethanolamine, triethanolamine, ethylenediamine, piperidine, diazabicyclooctane, diazabicycloundecene, pyridine, quinoline, picoline, lutidine and collidine can be used.

As the acidic compounds, inorganic compounds, e.g., hydrochloric acid, sulfuric acid, phosphoric acid, boric acid, sodium hydrogensulfate, potassium hydrogensulfate, potassium dihydrogenphosphate, and sodium dihydrogenphosphate, and organic compounds, e.g., acetic acid, tartaric acid, benzoic acid, trifluoroacetic acid, methanesulfonic acid, ethanesulfonic acid, benzenesulfonic acid, p-toluenesulfonic acid, saccharinic acid, phthalic acid, picolinic acid, and quinolinic acid can be used.

The conductivity of the ink of the present invention is generally from 0.01 to 10 S/m, and particularly preferably from 0.05 to 5 S/m.

The conductivity can be measured by an electrode method using commercially available saturated potassium chloride.

The conductivity can be controlled mainly by the ion concentration in a water base solution. When the salt concentration is high, desalting can be performed with an ultrafiltration membrane and the like. To control the conductivity by adding salts and the like, various organic and inorganic salts can be used.

As the inorganic salts, inorganic compounds, e.g., potassium halide, sodium halide, sodium sulfate, potassium sulfate, sodium hydrogensulfate, potassium hydrogensulfate, sodium nitrate, potassium nitrate, sodium hydrogencarbonate, potassium hydrogencarbonate, sodium phosphate, sodium monohydrogenphosphate, boric acid, potassium dihydrogenphosphate, and sodium dihydrogenphosphate, and organic compounds, e.g., sodium acetate, potassium acetate, potassium tartrate, sodium tartrate, sodium benzoate, potassium benzoate, sodium p-toluenesulfonate, potassium saccharinate, potassium phthalate, and sodium picolinate can be used.

The conductivity can also be controlled by selecting the later-described ingredients of an aqueous medium.

The viscosity of the ink of the present invention is preferably from 1 to 20 mPa.s at 25°C, more preferably from 2 to 15 mPa·s, and particularly preferably from 2 to 10 mPa·s. When the viscosity is more than 30 mPa·s, the fixing velocity of a recorded image slows down and the discharge performance also lowers. When the viscosity is less than 1 mPa·s, a recorded image blots, which leads to the reduction of an image quality.

The viscosity of ink can be easily adjusted by the addition amount of an ink solvent. As the ink solvents, e.g., glycerol, diethylene glycol, triethanolamine, 2-pyrrolidone, diethylene glycol monobutyl ether, and triethylene glycol monobutyl ether are used.

Viscosity adjustors may also be used. As viscosity adjustors, e.g., celluloses, water-soluble polymers, e.g., polyvinyl alcohol, and nonionic surfactants are exemplified. Viscosity adjustors are described in detail in Nendo Chosei Gijutsu (Techniques of Viscosity Adjustment), Chapter 9, Gijutsu Joho Kyokai (1999), and Ink Jet Printer yo Chemicals (98 zoho) - Zairyo no Kaihatsu Dohko Tenbo Chosa (Chemicals for Ink Jet Printer (addition of 98 new articles) - Development Trend of Materials and Research of the View), pp. 162 to 174, CMC Publishing Co. (1997).

The measuring method of liquid viscosity is described in detail in JIS Z8803, but it can be easily measured with a commercially available viscometer. For example, as a revolving type, B model viscometer and E model viscometer (manufactured by Tokyo Keiki Co., Ltd.) are available. In the present invention, liquid viscosity was measured with a oscillating type VM-100A-L model (manufactured by Yamaichi Denki Co., Ltd.) at 25°C. The unit of viscosity is Pascal-second (Pa.s), but milli-Pascal-second (mPa·s) is generally used.

The surface tension of the ink for use in the present invention is preferably from 20 to 50 mN/m at 25°C in both dynamic and static surface tensions, and more preferably from 20 to 40 mN/m. When the surface tension exceeds 50 mN/m, discharge stability, blotting at color mixing, and printing quality, such as fine lines, conspicuously deteriorate. On the other hand, when the surface tension is less than 20 mN/m, there are cases where printing failure due to the adhesion of the ink to the surface of hardware occurs at discharging time.

For the purpose of controlling surface tension, various surfactants of the above cationic, anionic, nonionic and betaine compounds can be added. Surfactants can be used in combination of two or more kinds.

As the measuring methods of static surface tension, a capillary rise method, a dropping method and a flying ring method are known, but a perpendicular sheet method is used in the present invention.

When a part of a glass or platinum sheet is immersed in a liquid and hung, the surface tension of the liquid works downward along the length where the liquid is in contact with the sheet. Surface tension can be measured by equilibrating this forth with the upward forth.

As the measuring methods of dynamic surface tension, as described in Shin Jikken Kagaku Koza, (Lectures on New Experimental Chemistry), Vol. 18, "Kaimen to Colloid (Interface and Colloid)", pp. 60 to 90, Maruzen Co. (1977), e.g., an oscillation jet method, a meniscus dropping method, and a maximum bubble pressure method are known. Further, a liquid film breaking method as disclosed in JP-A-3-2064, is known, but a bubble pressure differential method is used as the measuring method of dynamic surface tension in the present invention. The principle of measurement and the measuring method are described below.

When bubbles are formed in an agitated and homogeneous solution, new gas-liquid interfaces are formed, and the molecules of the surfactant in the solution come to the surface of the solution at a constant velocity. When bubbling rate (forming velocity of bubbles) is changed, if the formingvelocity slows down, more surfactant molecules come to gather on the bubble surfaces, and so the maximum bubble pressure just before the bubbles break becomes small, and the maximum bubble pressure (surface tension) to the bubbling rate can be detected. As a preferred measuring method of dynamic surface tension, a method of computing dynamic surface tension by forming bubbles in a solution with great and small two probes, and measuring the differential pressure of the two probes at the state of maximum bubble pressure can be exemplified.

The non-volatile ingredients in the ink of the present invention preferably account for 10 to 70 wt% of the total amount of ink in the points of the discharge stability of ink, a print image quality, the fastness of various properties of an image, and the reduction of blotting of an image after printing and the tackiness of a printed face, and more preferably from 20 to 60 wt% in the points of the discharge stability of ink and the reduction of blotting of an image after printing.

Non-volatile ingredients here mean liquids, solid contents and high molecular weight ingredients having a boiling point of 150°C or more under 1 atm. The non-volatile ingredients of the ink for ink jet are a dye, a high boiling point solvent, a polymer latex added according to necessity, a surfactant, a dye stabilizer, an antifungal agent and a buffer. Since many of these non-volatile ingredients other than a dye stabilizer reduce the dispersion stability of ink and remain on the ink jet image-receiving paper after printing, they have properties to hinder the stabilization by the aggregation of dyes on the image-receiving paper, deteriorate the fastness of various properties of an image part, and bring about image blotting under a high humidity condition.

The ink of the present invention can contain high molecular weight compounds. The high molecular weight compounds used herein indicate all the high molecular weight compounds contained in the ink having a number average molecular weight of 5,000 or more. As these high molecular weight compounds, water-soluble high molecular weight compounds capable of substantially being dissolved in an aqueous medium, water-dispersible high molecular weight compounds, e.g., a polymer latex and a polymer emulsion, and alcohol-soluble high molecular weight compounds capable of being dissolved in a polyhydric alcohols which are used as auxiliary solvents are exemplified, but those which are substantially homogeneously dissolved or dispersed in an ink solution are all included in the high molecular weight compounds in the present invention.

The specific examples of the water-soluble high molecular weight compounds include water-soluble high polymers, e.g., polyvinyl alcohol, silanol-modified polyvinyl alcohol, carboxymethyl cellulose, hydroxyethyl cellulose, polyvinyl pyrrolidone, polyalkylene oxide, e.g., polyethylene oxide and polypropylene oxide, and polyalkylene oxide derivatives, natural water-soluble high polymers, e.g., polysaccharides, starch, cationic starch, casein and gelatin, polyacrylic acid, polyacrylamide, and copolymers thereof, e.g., aqueous acrylate resins, aqueous alkyd resins, and water-soluble high molecular weight compounds having an -SO₃⁻ group or a -COO⁻ group in the molecule and substantially soluble in an aqueous medium. As the polymer latex, styrene-butadiene latex, styrene-acrylic latex and polyurethane latex are exemplified. Further, as the emulsion, an acrylic emulsion is exemplified.

These water-soluble high molecular weight compounds may be used alone, or two or more may be used in combination.

As has been described above, water-soluble high molecular weight compounds are used as viscosity adjustors for adjusting ink viscosity to a viscosity region of exhibiting good discharge characteristic, but when the use amount is too much, the ink viscosity increases and the discharge stability of the ink solution lowers, as a result, a nozzle easily clogs due to the precipitate when the ink is aged.

The addition amount of the viscosity adjustor of a high molecular weight compound depends upon the molecular weight of the compound added (the higher the molecular weight, the less is the addition amount), but the amount is generally from 0 to 5 wt% based on the total amount of the ink of the present invention, preferably from 0 to 3 wt%, and more preferably from 0 to 1 wt%.

In the present invention, various surfactants of the above-described cationic, anionic, nonionic and betaine compounds can be used as dispersants and dispersion stabilizers, and chelating agents represented by fluorine compounds, silicone compounds and EDTA can be used as defoaming agents, if necessary.

A recording paper and a recording film used for the ink of the present invention are described below. The supports of a recording paper and a recording film comprise chemical pulp, e.g., LBKP and NBKP, mechanical pulp, e.g., GP, PGW, RMP, TMP, CTMP, CMP and CGP, and waste paper pulp, e.g., DIP. Additives, e.g., well-knownpigments, a binder, a sizing agent, a fixing agent, a cationic agent, and a paper strength reinforcing agent, are mixed with pulps according to necessity, Supports manufactured by various apparatus, e.g., Fourdrinier machine and Yankee machine, can be used in the present invention. Besides these supports, synthetic paper and plastic film sheets can be used as supports. The thickness of a support is preferably from 10 to 250 µm, and weighting is preferably from 10 to 250 g/m².

A support may be directly provided with an image-receiving layer and a back coat layer to make an image-receiving material for the ink of the present invention, or an image-receiving material may be produced by providing a size press and an anchor coat layer with starch and polyvinyl alcohol, and then providing an image-receiving layer and a back coat layer. A support may be subjected to smoothing treatment by a calender, e.g., a machine calender, a TG calender or a soft calender.

Paper and plastic films both surfaces of which are laminated with polyolefin (e.g., polyethylene, polystyrene, polybutene and copolymers of them) or polyethylene terephthalate are more preferably used as supports. It is preferred to add a white pigment (e.g., titanium oxide and zinc oxide) or a tinting dye (e.g., cobalt blue, ultramarine and neodymium oxide) into polyolefin.

The image-receiving layer provided on a support contains a porous material and an aqueous binder. The image-receiving layer preferably contains a pigment, and a white pigment is preferred as the pigment. The examples of white pigments include inorganic white pigments, e.g., calcium carbonate, kaolin, talc, clay, diatomaceous earth, synthetic amorphous silica, aluminum silicate, magnesium silicate, calcium silicate, aluminum hydroxide, alumina, lithopone, zeolite, barium sulfate, calcium sulfate, titanium dioxide, zinc sulfide, and zinc carbonate, and organic pigments, e.g., styrene series pigments, acrylic series pigments, urea resins, and melamine resins. Porous inorganic white pigments are particularly preferred, and synthetic amorphous silica having a great pore area is preferably used. Both silicic anhydride manufactured by a dry method (a gaseous method) and silicic hydrate manufactured by a wet method can be used as synthetic amorphous silica.

As the recording paper containing the above pigments in an image-receiving layer, those disclosed in JP-A-10-81064, JP-A-10-119423, JP-A-10-157277, JP-A-10-217601, JP-A-11-348409, JP-A-2001-138621, JP-A-2000-43401, JP-A-2000-211235, JP-A-2000-309157, JP-A-2001-96897, JP-A-2001-138627, JP-A-11-91242, JP-A-8-2087, JP-A-8-2090, JP-A-8-2091, JP-A-8-2093, JP-A-8-174992, JP-A-11-192777 and JP-A-2001-301314 can be used.

As the aqueous binders contained in an image-receiving layer, water-soluble high polymers, e.g., polyvinyl alcohol, silanol-modified polyvinyl alcohol, starch, cationic starch, casein, gelatin, carboxymethyl cellulose, hydroxyethyl cellulose, polyvinyl pyrrolidone, polyalkylene oxide, and polyalkylene oxide derivatives, and water-dispersible high polymers, e.g., styrene-butadiene latex and an acrylic emulsion are exemplified. These aqueous binders may be used alone or in combination of two or more. Of these binders, polyvinyl alcohol and silanol-modified polyvinyl alcohol are preferably used in the points of an adhering property to pigments and peeling resistance of an ink-receptive layer.

In addition to pigments and aqueous binders, an image-receiving layer can contain a mordant, a waterproofing agent, a light fastness improver, a gas resistance improver, a surfactant, a hardening agent and other additives.

A mordant added to an image-receiving layer is preferably immobilized. For that sake, polymer mordants are preferably used.

Polymer mordants are disclosed in JP-A-48-28325, JP-A-54-74430, JP-A-59-124726, JP-A-55-22766, JP-A-55-142339, JP-A-60-23850, JP-A-60-23851, JP-A-60-23852, JP-A-60-23853, JP-A-60-57836, JP-A-60-60643, JP-A-60-118834, JP-A-60-122940, JP-A-60-122941, JP-A-60-122942, JP-A-60-235134, JP-A-1-161236, U.S. Patents 2,484,430, 2,548,564, 3,148,061, 3,309,690, 4,115,124, 4,124,386, 4,193,800, 4,273,853, 4,282,305 and 4,450,224. The materials for image-receiving layer containing the polymer mordants disclosed in JP-A-1-161236, pp. 212 to 215 are particularly preferred. When the polymer mordants disclosed in the same patent are used, an image having excellent image quality can be obtained and, further, the light fastness of the image is improved.

A waterproofing agent is effective for waterproofing of an image, and cationic resins are especially preferably used as the waterproofing agent. The examples of the cationic resins include polyamide polyamine epichlorohydrin, polyethyleneimine, polyaminesulfone, dimethyldiallylammonium chloride polymers, and cationic polyacrylamide. These cationic resins are preferably used in an amount of from 1 to 15 wt% based on the total solid content of an ink-receptive layer, and particularly preferably from 3 to 10 wt%.

As the light fastness improver and gas resistance improver, phenol compounds, hindered phenol compounds, thioether compounds, thiourea compounds, thiocyanic acid compounds, amine compounds, hindered amine compounds, TEMPO compounds, hydrazine compounds, hydrazide compounds, amidine compounds, vinyl group-containing compounds, ester compounds, amide compounds, ether compounds, alcohol compounds, sulfinic acid compounds, saccharides, water-soluble reducing compounds, organic acids, inorganic acids, hydroxyl group-containing organic acids, benzotriazole compounds, benzophenone compounds, triazine compounds, heterocyclic compounds, water-soluble metal salts, organic metal compounds, and metal complexes are exemplified.

The specific examples of these compounds are disclosed in JP-A-10-182621, JP-A-2001-260519, JP-A-2000-260519, JP-B-4-34953, JP-B-4-34513, JP-B-4-34512, JP-A-11-170686, JP-A-60-671 90, JP-A-7-276808, JP-A-2000-94829, International Patent Publication No. 512258/1996, and JP-A-11-321090

Surfactants function as a coating assistant, a peeling improver, a sliding improver or an antistatic agent. Surfactants are disclosed in JP-A-62-173463 and JP-A-62-183457.

Organic fluoro compounds may be used in place of surfactants. Organic fluoro compounds are preferably hydrophobic. The examples of organic fluoro compounds include fluorine surfactants, oily fluorine compounds (e. g., fluorine oil), and solid state fluorine compound resins (e.g., tetrafluoroethylene resins). Organic fluoro compounds are disclosed in JP-B-57-9053 (columns from 8 to 17), JP-A-61-20994 and JP-A-62-135826.

As the hardening agents, materials disclosed in JP-A-1-161236, p. 222, JP-A-9-263036, JP-A-10-119423 and JP A-2001-310547 can be used.

As other additives to be added to an image-receiving layer, a pigment dispersant, a thickener, a defoaming agent, a dye, a fluorescent brightening agent, an antiseptic, a pH adjustor, a matting agent and a hardening agent are exemplified. An ink-receptive layer may comprise one layer or two layers.

A recording paper and a recording film may be provided with a back coat layer, and a white pigment, an aqueous binder and other ingredients may be added to a back coat layer.

As the white pigments added to a back coat layer, white inorganic pigments, e.g., light calcium carbonate, heavy calcium carbonate, kaolin, talc, calcium sulfate, barium sulfate, titanium dioxide, zinc oxide, zinc sulfide, zinc carbonate, satin white, aluminum silicate, diatomaceous earth, calcium silicate, magnesium silicate, synthetic amorphous silica, colloidal silica, colloidal alumina, pseudo-boehmite, aluminum hydroxide, alumina, lithopone, zeolite, hydrated halloysite, magnesium carbonate, and magnesium hydroxide, and white organic pigments, e.g., styrene series plastic pigments, acrylic series plastic pigments, polyethylene, microcapsules, urea resins, and melamine resins are exemplified.

As the aqueous binders contained in a back coat layer, water-soluble high polymers, e.g., styrene-maleate copolymers, styrene-acrylate copolymers, polyvinyl alcohol, silanol-modified polyvinyl alcohol, starch, cationic starch, casein, gelatin, carboxymethyl cellulose, hydroxyethyl cellulose and polyvinyl pyrrolidone, and water-dispersible high polymers, e.g., styrene-butadiene latices and acrylic emulsions are exemplified. As other ingredients to be added to a back coat layer, a defoaming agent, a foam inhibitor, a dye, a fluorescent brightening agent, an antiseptic, and a waterproofing agent are exemplified.

The constitutional layers of an ink jet recording paper and a recording film (including a backing layer) may contain a dispersed product of polymer fine particles. A dispersed product of polymer fine particles is used for the purpose of improving physical properties of films, e.g., the stabilization of dimension, prevention of curling, prevention of adhesion, and prevention of film cracking. Dispersed products of polymer fine particles are disclosed in JP-A-62-245258, JP-A-62-136648 and JP-A-62-110066. Cracking and curling of a layer can be prevented by adding a dispersed product of polymer fine particles having a low glass transition temperature (40°C or lower) to the layer containing a mordant. Curing can also be prevented by adding a dispersed product of polymer fine particles having a high glass transition temperature to a backing layer.

Ink jet recording methods applicable to the ink of the present invention are not restricted and used in well-known systems, e.g., a charge control system of discharging ink by making use of electrostatic induction, a drop-on-demand system (a pressure pulse system) by making use of oscillation pressure of a piezoid, an acoustic ink jet system of converting electric signals to acoustic beams to thereby irradiate ink, and discharging the ink by making use of the pressure of radiation, and a thermal ink jet (bubble jet) system of heating ink to form bubbles, and discharging the ink by making use of the pressure generated.

A system of injecting ink called photo-ink having low density in a large number and in a small volume, a system of improving image quality by using a plurality of inks having substantially the same hue and different densities, and a system of using colorless and transparent ink are included in ink jet recording systems.

The ink of the present invention can also be applied to uses other than ink jet recording. For example, it can be used as the materials for display images, and as the image-forming materials for interior and exterior decorations.

The materials for display images include various kinds of things, e.g., posters, wall papers, small articles for decoration (knickknacks and dolls), advertising leaflets, packing papers, wrapping materials, paper bags, vinyl bags, packaging materials, signboards, images painted on or attached to the side of traffic means (motorcars, auto buses, electric cars), and shirts with logo. When the ink of the present invention is used as the image-forming material of display images, "the images" includes, besides the image in a narrow sense, all the patterns by dyes recognizable by human beings, e.g., abstract designs, characters and geometrical patterns.

Materials for interior decoration include various kinds of things, e.g., wall papers, small articles for decoration (knickknacks and dolls), the members of lighting equipments, the members of furniture, and the design members of floors and ceilings. When the ink of the present invention is used as image-forming material, "the image" includes, besides the image in a narrow sense, all the patterns by dyes recognizable by human beings, e.g., abstract designs, characters and geometrical patterns.

Materials for exterior decorations include various kinds of things, e.g., wall materials, roofing materials, signboards, gardening materials, small articles for exterior decoration (knickknacks and dolls), and the members of exterior lighting equipments. When the ink of the present invention is used as image-forming material, "the image" includes not only the image in a narrow sense but all the patterns by dyes recognizable by human beings, e.g., abstract designs, characters and geometrical patterns.

In the above uses, media on which patterns are formed include papers, fibers, fabrics (including non-woven fabrics), plastics, metals, and ceramics. As coloring patterns, dyes can be fixed by mordanting, textile printing, or in the form of the reactive dye introduced with reactive groups. Of these, coloring by mordanting pattern is preferred.

In the manufacture of the ink of the present invention, sound wave oscillation can be added to a dissolving process of additives, such as dyes.

For preventing the ink of the present invention from generating bubbles by the pressure applied at a recording head, sound wave oscillation is performed to remove bubbles in advance by applying sound wave energy, which is the same with or higher than the energy applied at a recording head, during the manufacturing processes of the ink.

Sound wave oscillation is generally a supersonic wave having an oscillation frequency of 20 kHz or more, preferably 40 kHz or more, and more preferably 50 kHz or more. The energy applied to a liquid by sound wave oscillation is generally 2x10⁷ J/m³ or more, preferably 5x10⁷ J/m³ or more, and more preferably 1x10⁸ J/m³ or more. Sound wave oscillation is generally applied for 10 minutes to 1 hour or so.

Sound wave oscillation may be applied at any time in any process after a dye has been put in a medium. Even when sound wave oscillation is applied to the ink finished and once preserved, the effect can be obtained. However, the greater effect of bubble-removal can be obtained by applying sound wave oscillation during dissolving and/or dispersing a dye in a medium, and dissolution and/or dispersion of a dye in a medium is preferably accelerated.

That is, the process of at least applying sound wave oscillation may be performed during the process of dissolving and/or dispersing a dye in a medium, or may be performed after these processes. In other words, the process of at least applying sound wave oscillation can be carried out arbitrarily one time or more during the time after preparation of ink and before becoming a finished product.

The process of dissolving and/or dispersing a dye in a medium preferably comprises the step of dissolving a dye in a partial medium of the entire medium, and the step of mixing the residual medium, soundwave oscillation is preferably applied in at least either step, and sound wave oscillation is more preferably applied in the step of dissolving a dye in a partial medium of the entire medium.

The above mixing process of the residual medium may comprise a single process or may comprise a plurality of processes.

It is preferred to use deaeration under heating or deaeration under reduced pressure in the manufacture of the ink of the present invention in view of the improvement of the effect of removing bubbles in the ink. It is preferred to perform deaeration under heating or deaeration under reduced pressure at the same time with or after the step of mixing the residual medium.

As the sound wave oscillation-generating means in the process of applying sound wave oscillation, well-known apparatus such as an ultrasonic disperser can be exemplified.

In the manufacture of the ink of the present invention, a process of removing solid dusts by filtration which is performed after preparation of the ink is important. A filter having an effective diameter of 1 µm or less, preferably from 0.05 to 0. 3 µm, and especially preferably from 0.25 to 0.3 µm, is used in this process. Various materials of filters can be used but, in particular, in the case of a water-soluble ink, it is preferred to use a filter prepared for a water base solvent. Above all, filters made of polymer materials are preferably used, since dusts come out with difficulty. Filtration may be carried out by feeding a liquid through a filter, and both of filtration under pressure and filtration under reduced pressure can be used.

After filtration, air is sometimes taken in the solution. Since the bubbles attributable to this air often cause the disorder of an image in ink jet recording, it is preferred to provide the above process of removing bubbles separately. For removing bubbles, the solution after filtration may be allowed to stand, or various methods using commercially available apparatus, e.g., an ultrasonic bubble-removing method and a bubble-removing method under reduced pressure, can be utilized.

It is preferred to do this work in a clean room or a space such as clean bench for preventing the mixture of dusts during working. In the present invention, it is preferred to do this work in particular in the space ranked class 1, 000 or less as the degree of cleanliness. "The degree of cleanliness" is a value measured by a dust counter.

The hit droplet volume of the ink of the present invention on a recording material is generally from 0.1 to 100 pl, preferably from 0.5 to 50 pl, arid particularly preferably from 2 to 50 pl.

The ink of the present invention can be used for image-recording by an ink jet printer.

Ink jet recording methods using the ink of the present invention are not restricted and used in well-known systems, e.g., a charge control system of discharging ink by making use of electrostatic induction, a drop-on-demand system (a pressure pulse system) by making use of oscillation pressure of a piezoid, an acoustic ink jet system of converting electric signals to acoustic beams to thereby irradiate ink, and discharging the ink by making use of the pressure of radiation, and a thermal ink jet (bubble jet) system of heating ink to form bubbles, and discharging the ink by making use of the pressure generated.

A system of injecting ink called photo-ink having low density in a large number and in a small volume, a system of improving image quality by using a plurality of inks having substantially the same hue and different densities, and a system of using colorless and transparent ink are included in ink jet recording systems. The hit droplet volume of ink is mainly controlled by a print head.

In the case of a thermal ink jet system, for example, it is possible to control the hit droplet volume by the structure of a print head. That is, a droplet of a desired size can be hit by changing an ink chamber, a heating unit and the size of a nozzle. Further, even in the case of a thermal ink jet system, it is possible to realize droplets having a plurality of sizes by providing a plurality of print heads having different heating units and different nozzle sizes.

In the case of a drop-on-demand system using a piezoid, it is possible to change the hit droplet volume by the structure of a print head similarly to the thermal ink jet system, but, as is described later, droplets of a plurality of sizes can be hit with the print heads of the same structure by controlling the wave forms of the driving signal for driving the piezoid.

The discharge frequency in the case of hitting droplets of the ink of the present invention on a recording material is preferably 1 kHz or more.

For recording a high quality image, like a photograph, it is necessary to make the hit droplet density 600 dpi (dot per inch) or higher for reproducing an image high in sharpness with small droplets.

On the other hand, in hitting droplets of the ink of the present invention with heads having a plurality of nozzles, in a recording system wherein a recording paper and heads mutually move in the orthogonal directions to perform recording, the number of heads which can be simultaneously driven is from several tens to about 200. Even in the system called a line head comprising fixed heads, the number of heads is several hundreds. The reasons are that electric power for driving is restricted, and that many head nozzles cannot be driven at the same time, since the heat generated at heads exerts an influence upon images.

It is possible to increase a recording velocity by increasing the driving frequency.

In the case of thermal ink jet system, the hit droplet frequency can be controlled by controlling the frequency of the head driving signal for heating the heads.

In the case of using a piezoid, the hit droplet frequency can be controlled by controlling the frequency of the signal for driving the piezoid.

Driving of piezo heads is described below. A hit droplet size, a hit droplet velocity and a hit droplet frequency of the image signal to be printed are decided by the printer controller, and a signal for driving the print heads is formed. The driving signal is supplied to the heads. The hit droplet size, the hit droplet velocity and the hit droplet frequency are controlled by the signal driving the piezoid. The hit droplet size and the hit droplet velocity are decided by the form and the amplitude of the driving wave form, and the hit droplet frequency is decided by the cycle period of the signal.

When the hit droplet frequency is set at 10 kHz, the heads are driven at every 100 micro-seconds, and recording of one line is finished at 400 micro-seconds. By setting the transfer speed of the recording paper at 1/600 inches every 400 micro-seconds, i.e., about 42 µm, printing can be performed at the rate of 1.2 seconds per a sheet.

The ink of the present invention is preferably used in a printer having the constitution as disclosed in JP-A-11-170527. The ink cartridge disclosed in JP-A-5-229133 is preferably used for the ink of the present invention. Regarding suction and the constitution of the cap covering the print heads at that time, those disclosed, e.g., in JP-A-7-276671 are preferably used. It is also preferred to provide the filter as disclosed in JP-A-9-277552 in the vicinity of the heads for excluding bubbles.

It is preferred that nozzle surfaces are subjected to water repellent treatment as disclosed in Japanese Patent Application No. 2001-016738. The printer may be a printer connected with a computer, or may be specialized as a printer to print a photograph.

The ink jet recording with the ink of the present invention is performed generally by the average hit droplet velocity of hitting the ink on a recording material of 2 m/sec or more, and preferably 5/sec or more.

The hit droplet velocity is controlled by the form and the amplitude of the wave form for driving the heads.

Droplets of a plurality of sizes can be hit with the print heads of the same structure by properly using the plurality of wave forms.

### EXAMPLE

### REFERENCE EXAMPLE 1

Deionized water was added to the following ingredients to make the volume of the solution one liter, and the solution was stirred at 30 to 40°C for one hour with heating. The solution was then filtered with a microfilter having an average pore diameter of 0.25 µm, thereby Ink Solution LM-101 for light magenta was prepared.

### Prescription of Light Magenta Ink LM-101:

**Solid content**

| | |
|---|---|
| Magenta dye shown below (MD-1) | 7.5 g/liter |
| Urea | 37 g/liter |

**Liquid ingredients**

| | |
|---|---|
| Diethylene glycol (DEG) | 140 g/liter |
| Glycerol (GR) | 120 g/liter |
| Triethylene glycol monobutyl ether (TGB) | 120 g/liter |
| Triethanolamine (TEA) | 6.9 g/liter |
| Sarfinol STG (SW) | 10 g/liter |

### MD-1

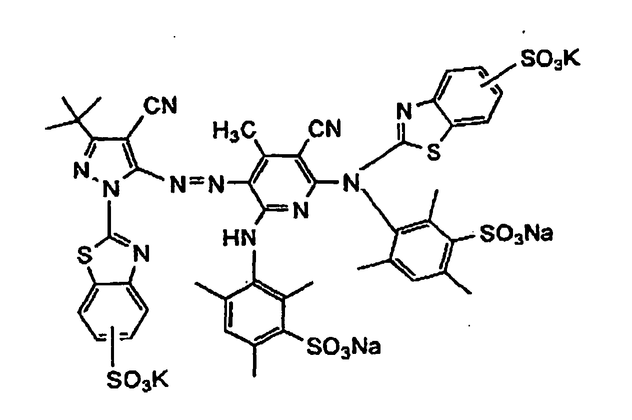

Ink Solution M-101 for magenta was prepared by increasing the amount of magenta dye (MD-1) to 23 g in the above prescription.

### Prescription of Magenta Ink M-101:

**Solid content**

| | |
|---|---|
| Magenta dye (MD-1) | 23 g/liter |
| Urea | 37 g/liter |

**Liquid ingredients**

| | |
|---|---|
| Diethylene glycol (DEG) | 140 g/liter |
| Glycerol (GR) | 120 g/liter |
| Triethylene glycol monobutyl ether (TGB) | 120 g/liter |
| Triethanolamine (TEA) | 6.9 g/liter |
| Sarfinol STG (SW) | 10 g/liter |

Inks LM-102 to 108, M-102 to 108 having the same composition with LM-101 and M-101 respectively were prepared except for adding the ingredient as shown in Table 1 below to LM-101 and M-101.

**TABLE 1**

| Sample No. | Additive |
|---|---|
| LM-101, M-101 (Comparison) | None |
| LM-102, M-102 (Comparison) | 10 g/liter of POEP-1 to LM-101 and M-101 |
| LM-103, M-103 (Comparison) | 10 g/liter of POEN-1 to LM-101 and M-101 |
| LM-104, M-104 (Reference) | 10 g/liter of X-1 to LM-101 and M-101 |
| LM-105, M-105 (Reference) | 10 g/liter of X-5 to LM-101 and M-101 |
| LM-106, M-106 (Reference) | 10 g/liter of X-9 to LM-101 and M-101 |
| LM-107, M-107 (Reference) | 10 g/liter of X-12 to LM-101 and M-101 |
| LM-108, M-108 (Reference) | 10 g/liter of X-16 to LM-101 and M-101 |

- POEP-1:: Polyoxyethylene nonylphenyl ether (PEO chain.: about 30)
- POEN-1:: Polyoxyethylene naphthyl ether (PEO chain: about 50)
- PEO chain:: Polymerization number of ethylene oxide

Each of these inks was filled in cartridges of magenta ink and light magenta ink of ink jet printer PM-950C (manufactured by Epson Corporation) . The inks of PM-950C were used as inks of other colors, and a monochrome image of magenta was printed. Ink jet paper photo-glossy paper EX (manufactured by Fuji Photo Film Co., Ltd.) was used as the image-receiving sheet, on which an image was printed and image fastness under a high humidity condition was evaluated.

### Evaluation of experiment:

A print pattern consisting of four square patterns of magenta (M) of 3 cm x 3 cm forming two lines with a white space of 1 mm wide intervening between four square patterns was formed. After this image sample was stored at 25°C, 90% RH for 72 hours, blotting of the magenta dye in the white space was observed. In the magenta filter of status A of the magenta density increase in the white space immediately after printing, the density increase of 0.01 or less was taken as A, from 0.01 to 0.05 as B, and 0.05 or more was taken as C.

The results obtained are shown in Table 2 below.

**TABLE 2**

| Sample No. | Blotting of M |
|---|---|
| Pure Ink PM-950C (manufactured by Epson Corporation) | B |
| LM-101, M-101 (Comparison) | C |
| LM-102, M-102 (Comparison) | C |
| LM-103, M-103 (Comparison) | C |
| LM-104, M-104 (Reference) | A |
| LM-105, M-105 (Reference) | A |
| LM-106, M-106 (Reference) | A |
| LM-107, M-107 (Reference) | A |
| LM-108, M-108 (Reference) | A |

From the results in Table 2, it was found that the samples in which the Reference ink sets were used were superior to all the comparative samples in the point of blotting of M.

### Reference EXAMPLE 2

Deionized water was added to the following ingredients to make the volume of the solution one liter, and the solution was stirred at 30 to 40°C for one hour with heating. The solution was then filtered with a microfilter having an average pore diameter of 0.25 µm, thereby Ink Solution LC-101 for light cyan was prepared.

### Prescription of Light Cyan Ink LC-101:

**Solid content**

| | |
|---|---|
| Cyan dye (CD-1) | 17.5 g/liter |
| Proxel | 3.5 g/liter |

**Liquid ingredients**

| | |
|---|---|
| Diethylene glycol | 150 g/liter |
| Glycerol | 130 g/liter |
| Triethylene glycol monobutyl ether | 130 g/liter |
| Triethanolamine | 6.9 g/liter |
| Sarfinol STG (SW: nonionic surfactant) | 10 g/liter |

Ink Solution C-101 for cyan was prepared by increasing the amount of cyan dye (CD-1) to 68 g in the above prescription.

### Prescription of Cyan Ink C-101:

**Solid content**

| | |
|---|---|
| Cyan dye (CD-1) | 68 g/liter |
| Proxel | 3.5 g/liter |

**Liquid ingredients**

| | |
|---|---|
| Diethylene glycol | 150 g/liter |
| Glycerol | 130 g/liter |
| Triethylene glycol monobutyl ether | 130 g/liter |
| Triethanolamine | 6.9 g/liter |
| Sarfinol STG (SW: nonionic surfactant) | 10 g/liter |

Inks LC-102 to 108, C-102 to 108 having the same composition with LC-101 and C-101 respectively were prepared except for adding the ingredient as shown in Table 3 below to LC-101 and C-101.

**TABLE 3**

| Sample No. | Additive |
|---|---|
| LC-101, C-101 (Comparison) | None |
| LC-102, C-102 (Comparison) | 10 g/liter of POEP-1 to LC-101 and C-101 |
| LC-103, C-103 (Comparison) | 10 g/liter of POEN-1 to LC-101 and C-101 |
| LC-104, C-104 (Reference) | 10 g/liter of X-1 to LC-101 and C-101 |
| LC-105, C-105 (Reference) | 10 g/liter of X-5 to LC-101 and C-101 |
| LC-106, C-106 (Reference) | 10 g/liter of X-9 to LC-101 and C-101 |
| LC-107, C-107 (Reference) | 10 g/liter of X-12 to LC-101 and C-101 |
| LC-108, C-108 (Reference) | 10 g/liter of X-16 to LC-101 and C-101 |

- POEP-1:: Polyoxyethylene nonylphenyl ether (PEO chain: about 30)
- POEN-1:: Polyoxyethylene naphthyl ether (PEO chain: about 50)

Each of these inks was filled in cartridges of cyan ink and light cyan ink of ink jet printer PM-950C (manufactured by Epson Corporation), and evaluation was performed in the same manner as in Reference Example 1.

The results obtained are shown in Table 4 below.

**TABLE 4**

| Sample No. | Blotting of C |
|---|---|
| Pure Ink PM-950C (manufactured by Epson Corporation) | B |
| LC-101, C-101 (Comparison) | C |
| LC-102, C-102 (Comparison) | C |
| LC-103, C-103 (Comparison) | C |
| LC-104, C-104 (Reference) | A |
| LC-105, C-105 (Reference) | A |
| LC-106, C-106 (Reference) | A |
| LC-107, C-107 (Reference) | A |
| LC-108, C-108 (Reference) | A |

From the results in Table 4, it was found that the samples in which the Reference ink sets were used were superior to all the comparative samples in the point of blotting of cyan (C).

### Reference Example 3

Deionized water was added to the following ingredients to make the volume of the solution one liter, and the solution was stirred at 30 to 40°C for one hour with heating. The solution was then filtered with a microfilter having an average pore diameter of 0.25 µm, thereby colorless inks containing no pigment were prepared as shown in Table 5 below.

**TABLE 5**

| Prescription of Colorless Ink | | | | | |
|---|---|---|---|---|---|
| | B-1 | B-2 | B-3 | B-4 | B-5 |
| Betaine compound | None | x-1 10 g/liter | X-5 10 g/liter | X-9 10 g/liter | X-12 10 g/liter |
| Proxel | 3.5 g/liter | 3.5 g/liter | 3.5 g/liter | 3.5 g/liter | 3.5 g/liter |
| Diethylene glycol | 150 g/liter | 150 g/liter | 150 g/liter | 150 g/liter | 150 g/liter |
| Glycerol | 130 g/liter | 130 g/liter | 130 g/liter | 130 g/liter | 130 g/liter |
| Triethylene glycol monobutyl ether | 130 g/liter | 130 g/liter | 130 g/liter | 130 g/liter | 130 g/liter |
| Finished amount (after water addition) | 1,000 ml | 1,000 ml | 1,000 ml | 1,000 ml | 1,000 ml |

Each of these inks was filled in a cartridge of black ink of ink jet printer PM-950C (manufactured by Epson Corporation).

An ink set was prepared by using M-1 and LM-1 in Reference Example 1 as magenta inks, and pure inks of PM-950C as inks of other colors. Printing of the print pattern was performed in the same manner as in Example 1 with magenta inks, and then solid printing was performed on the print pattern by using inks B-1 to B-5.

After this image sample was stored at 25°C, 90% RH for 72 hours, blotting of the magenta dye in the white space was observed. In the magenta filter of status A of the magenta density increase in the white space immediately after printing, the density increase of 0.01 or less was taken as A, from 0.01 to 0.05 as B, and 0.05 or more was taken as C.

The results obtained are shown in Table 6 below.

**TABLE 6**

| Sample No. | Blotting of M |
|---|---|
| B-1 (Comparison) | C |
| B-2 (Reference) | A |
| B-3 (Reference) | A |
| B-4 (Reference) | A |
| B-5 (Reference) | A |

From the results in Table 6, it was found that the samples in which the Reference ink sets were used were superior to all the comparative samples in the point of blotting of magenta.

The ink set for ink jet in accordance with the present invention can effectively inhibit ink from blotting by using a betaine compound.

## Claims

1. An ink set comprising at least four kinds of inks including a coloring ink and a colorless ink, wherein at least one of the coloring inks and the colorless ink contains a betaine compound, the coloring ink is an ink comprising a dye dissolved in water or an organic solvent, and the dye is a soluble dye, wherein the betaine compound is represented by the following formula (1): 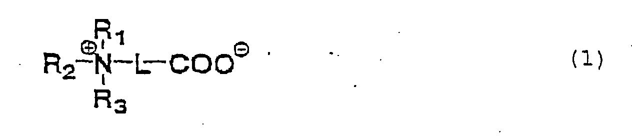 wherein R₁, R₂ and R₃ each represents an alkyl group, an aryl group or a heterocyclic group, at least two of R₁, R₂ and R₃ may be linked with each other to form a ring structure; L represents a divalent linking group; and at least one of R₁, R₂, R₃ and L is a group having from 8 to 40 carbon atoms.

2. The ink set as claimed in claim 1, wherein R₁, R₂ and R₃ in formula (1) each represents an alkyl group

3. The ink set as claimed in claim 1, wherein at least one of R₁, R₂, R₃ and L is a linear alkyl group having from 8 to 40 carbon atoms.

4. The ink set as claimed in claim 1, wherein at least one of R₁, R₂ and R₃ is a linear alkyl group having from 8 to 40 carbon atoms.

5. The ink set as claimed in claim 1, wherein the dye is a water-soluble dye.

6. The ink set as claimed in claim 1, wherein the coloring ink is an ink of an aqueous solution type containing a water-soluble dye.

7. The ink set as claimed in claim 1, wherein the betaine compound is contained in a proportion of from 0.01 to 20 wt%.

8. The ink set as claimed in claim 1, wherein all of the at least four kinds of inks including colorless ink contain the betaine compound.

9. The ink set as claimed in any of the claims 1 to 8, wherein, in addition to the betaine compound, at least one surfactant is present.

10. The ink set as claimed in claim 9, wherein the amount of the other surfactants is from 0.001 to 15 wt.-%, based on the ink.

11. The ink set as claimed in any one of the claims 1 to 10 wherein the at least four kinds of inks include colorless ink, magenta ink and cyan ink.

12. Ink set according to any one of the claims 1 to 11, wherein the betaine compound is contained in the inks in a proportion from 0.1 to 10% by weight.

13. Ink set according to any one of the claims 1 to 12, wherein the betaine compound is contained in the inks in a proportion from 0.5 to 5 % by weight.

14. An ink jet recording method which comprises image-recording by using the ink set claimed in any of the claims 1 to 12 with an ink jet printer.

## Patentansprüche

1. Tintensatz, umfassend zumindest vier Arten von Tinten, einschließlich einer färbenden Tinte und einer farblosen Tinte, worin zumindest eine von den färbenden Tinten und der farblosen Tinte eine Betainverbindung enthält, wobei die färbende Tinte eine Tinte ist, die einen Farbstoff enthält, der in Wasser oder einem organischen Lösungsmittel aufgelöst ist, und der Farbstoff ein löslicher Farbstoff ist, worin die Betainverbindung durch die folgende Formel (1) dargestellt ist: 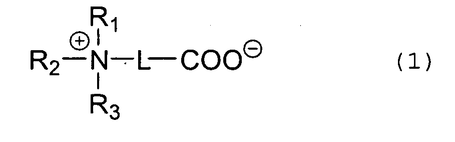 worin R₁, R₂ und R₃ jeweils eine Alkylgruppe, Arylgruppe oder heterocyclische Gruppe sind, wobei zumindest zwei von R₁, R₂ und R₃ aneinander zur Bildung einer Ringstruktur gebunden sein können; L eine bivalente Bindegruppe ist; und zumindest eines von R₁, R₂, R₃ und L eine Gruppe mit 8 bis 40 Kohlenstoffatomen ist.

2. Tintensatz nach Anspruch 1, worin R₁, R₂ und R₃ in der Formel (1) jeweils eine Alkylgruppe sind.

3. Tintensatz nach Anspruch 1, worin zumindest eines von R₁, R₂ und R₃ und L eine lineare Alkylgruppe mit 8 bis 40 Kohlenstoffatomen ist.

4. Tintensatz nach Anspruch 1, worin zumindest eines von R₁, R₂ und R₃ eine lineare Alkylgruppe mit 8 bis 40 Kohlenstoffatomen ist.

5. Tintensatz nach Anspruch 1, worin der Farbstoff ein wasserlöslicher Farbstoff ist.

6. Tintensatz nach Anspruch 1, worin die färbende Tinte eine Tinte vom wäßrigen Lösungstyp mit einem wasserlöslichen Farbstoff ist.

7. Tintensatz nach Anspruch 1, worin die Betainverbindung in einem Anteil von 0,01 bis 20 Gew.% enthalten ist.

8. Tintensatz nach Anspruch 1, worin alle der zumindest vier Arten von Tinten, einschließlich der farblosen Tinte, die Betainverbindung enthalten.

9. Tintensatz nach einem der Ansprüche 1 bis 8, worin zusätzlich zu der Betainverbindung zumindest ein Tensid vorhanden ist.

10. Tintensatz nach Anspruch 9, worin die Menge der anderen Tenside von 0,001 bis 15 Gew.% ist, bezogen auf die Tinte.

11. Tintensatz nach einem der Ansprüche 1 bis 10, worin die zumindest vier Arten von Tinten farblose Tinte, Magentatinte und Cyantinte umfassen.

12. Tintensatz nach einem der Ansprüche 1 bis 11, worin die Betainverbindung in den Tinten in einem Anteil von 0,1 bis 10 Gew.% enthalten ist.

13. Tintensatz nach einem der Ansprüche 1 bis 12, worin die Betainverbindung in den Tinten in einem Anteil von 0,5 bis 5 Gew.% enthalten ist.

14. Tintenstrahl-Aufzeichnungsverfahren, umfassend das bildweise Aufzeichnen durch Verwendung des Tintensatzes nach einem der Ansprüche 1 bis 12 mit einem Tintenstrahldrucker.

## Revendications

1. Ensemble d'encres comprenant au moins quatre sortes d'encres incluant une encre colorante et une encre incolore, dans lequel au moins l'une des encres colorantes et de l'encre incolore contient un composé de la bétaïne, l'encre colorante est une encre comprenant un colorant dissout dans de l'eau ou un solvant organique et le colorant est un colorant soluble, dans lequel le composé de la bétaïne est représenté par la formule (1) suivante : 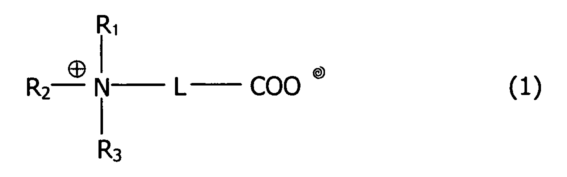 dans laquelle R₁, R₂ et R₃ représentent chacun un groupe alkyle, un groupe aryle ou un groupe hétérocyclique, au moins deux de R₁, R₂ et R₃ peuvent être liés l'un à l'autre pour former une structure cyclique ; L représente un groupe de liaison divalent ; et au moins l'un de R₁, R₂, R₃ et L est un groupe ayant de 8 à 40 atomes de carbone.

2. Ensemble d'encres selon la revendication 1, dans lequel R₁, R₂ et R₃ dans la formule (1) représentent chacun un groupe alkyle.

3. Ensemble d'encres selon la revendication 1, dans lequel au moins l'un de R₁, R₂, R₃ et L est un groupe alkyle linéaire ayant de 8 à 40 atomes de carbone.

4. Ensemble d'encres selon la revendication 1, dans lequel au moins l'un de R₁, R₂ et R₃ est un groupe alkyle linéaire ayant de 8 à 40 atomes de carbone.

5. Ensemble d'encres selon la revendication 1, dans lequel le colorant est un colorant soluble dans l'eau.

6. Ensemble d'encres selon la revendication 1, dans lequel l'encre colorante est une encre de type solution aqueuse contenant un colorant soluble dans l'eau.

7. Ensemble d'encres selon la revendication 1, dans lequel le composé de la bétaïne est contenu en proportion allant de 0,01 à 20 % en poids.

8. Ensemble d'encres selon la revendication 1, dans lequel la totalité des au moins quatre sortes d'encres incluant une encre incolore contiennent le composé de la bétaïne.

9. Ensemble d'encres selon l'une quelconque des revendications 1 à 8, dans lequel, en plus du composé de la bétaïne, au moins un tensioactif est présent.

10. Ensemble d'encres selon la revendication 9, dans lequel la quantité des autres tensioactifs va de 0,001 à 15 % en poids sur la base de l'encre.

11. Ensemble d'encres selon l'une quelconque des revendications 1 à 10, dans lequel les au moins quatre sortes d'encres incluent une encre incolore, une encre magenta et une encre cyan.

12. Ensemble d'encres selon l'une quelconque des revendications 1 à 11, dans lequel le composé de la bétaïne est contenu dans les encres en proportion allant de 0,1 à 10 % en poids.

13. Ensemble d'encres selon l'une quelconque des revendications 1 à 12, dans lequel le composé de la bétaïne est contenu dans les encres en proportion allant de 0,5 à 5 % en poids.

14. Procédé d'impression par jet d'encre lequel comprend l'impression d'images en utilisant l'ensemble d'encres selon l'une quelconque des revendications 1 à 12 avec une imprimante à jet d'encre.
